# EUROPEAN PATENT APPLICATION

(11) **EP 4 629 416 A1**
(43) Date of publication of application: **08.10.2025**
(21) Application number: 24854346.4
(22) Date of filing: 29.07.2024
(51) Int. Cl.: H01M 50/211, H01M 50/242, H01M 10/6551

(54) **BATTERY MODULE AND BATTERY PACK INCLUDING SAME**

(30) Priority: 16.08.2023 KR 20230107114; 24.07.2024 KR 20240097888
(71) Applicant: LG Energy Solution, Ltd., Seoul 07335 (KR)
(72) Inventor: KIM, Ji Hwan, Daejeon 34122 (KR); PARK, Sanggab, Daejeon 34122 (KR); LEE, Subin, Daejeon 34122 (KR); LEE, Hyunjae, Daejeon 34122 (KR)
(74) Representative: Plasseraud IP
(86) International application number: PCT/KR2024/011036
(87) International publication number: WO 2025/037794

(57) **Abstract**

BATTERY MODULE AND BATTERY PACK INCLUDING THE SAME

A battery module of the present disclosure includes a battery cell stack containing a plurality of battery cells; a module frame that includes a bottom portion and two side surface portions facing each other, and accommodates the battery cell stack therein; a thermally conductive resin layer disposed between one surface of the module frame and the battery cell stack; a pad disposed on at least one end of the one surface of the module frame; and a reinforcement material disposed between the battery cell stack and the pad, wherein the reinforcement material fills a space between the battery cell stack and the pad.

## Description

### [TECHNICAL FIELD]

### Cross-Reference to Related Applications

This application claims priority to and the benefit of Korean Patent Application No. 10-2023-0107114, filed on August 16, 2023, and Korean Patent Application No. 10-2024-0097888, filed on July 24, 2024, with the Korean Intellectual Property Office, the disclosures of which are incorporated herein in their entirety by reference.

The present disclosure relate to a battery module and a battery pack including the same, and more particularly, to a battery module that prevents overflow of a thermally conductive resin and a battery pack including the same.

### [BACKGROUND]

Secondary batteries, which are highly applicable to various products and exhibit superior electrical properties such as high energy density, or the like, are not only commonly applied to portable devices, but also universally applied to an electric vehicle or a hybrid electric vehicle and an energy storage system driven by electrical power sources. Such secondary batteries are gaining attention for their primary advantage of remarkably reducing the use of fossil fuels and not generating by-products from the use of energy, making them a new eco-friendly and energy efficient source of energy.

In small mobile devices, one, or two, or three battery cells are used per device, while medium- or large-sized devices such as vehicles require high power and large capacity. Therefore, a medium- or large-sized battery module having a plurality of battery cells electrically connected to one another is used.

Since the medium- or large-sized battery module is preferably manufactured with as small a size and weight as possible, a prismatic battery, a pouch-type battery, or the like, which can be stacked with a high degree of integration and has a small weight relative to capacity, is mainly used as a battery cell of the medium- or large-sized battery module. On the other hand, the battery module may include a frame member that is opened at front and rear surfaces and can house the battery cell stack in an internal space in order to protect the cell stack from external impact, heat, or vibration.

FIG. 1 is an exploded perspective view showing a conventional battery module.

FIG. 2 is a perspective view of a conventional battery cell stack as viewed from below.

FIG. 3 is a cross-sectional view showing a cross section of the battery module of FIG. 1 taken along the YZ plane.

FIG. 4 is an enlarged cross-sectional view showing a portion of FIG. 3.

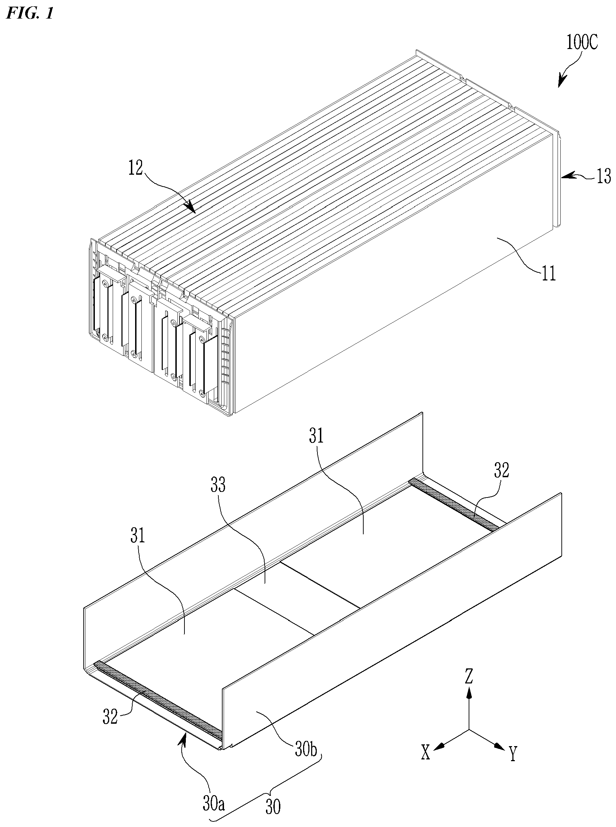

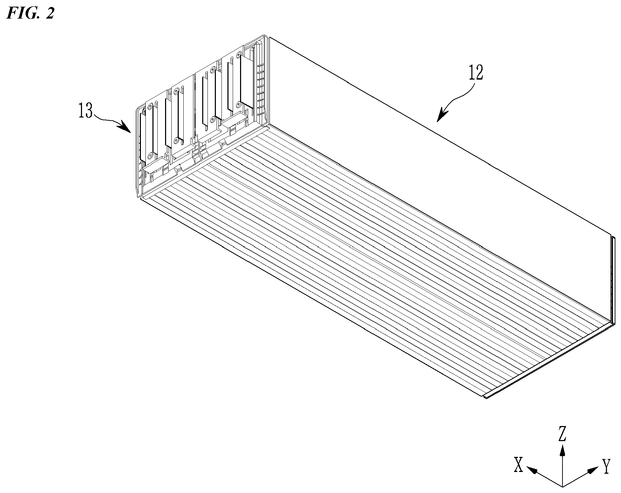

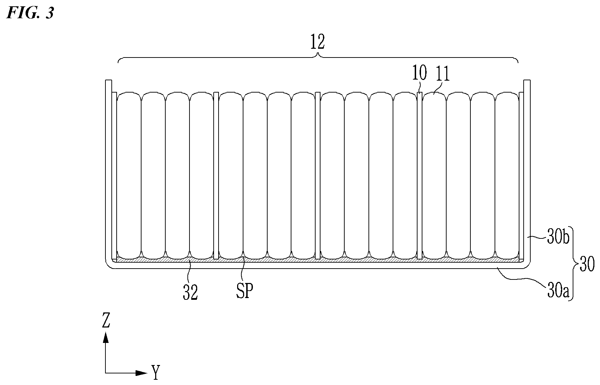

Referring to FIGS. 1 and 2 together, a conventional battery module 100C includes a battery cell stack 12 containing a plurality of battery cells 11, and a module frame 30 that accommodates the battery cell stack 12 therein. The battery cell stack 12 may further include a compression pad 10 disposed between a plurality of battery cells 11, as illustrated in FIG. 3.

The battery module 100C may further include an upper plate (not shown) that couples with a module frame 30 and covers the upper portion of the battery cell stack 12, an end plate (not shown) located on a front surface and a rear surface of the battery cell stack 12, respectively, and a busbar frame 13 located between the battery cell stack 12 and the end plate (not shown).

A conventional module frame 30 includes a bottom portion 30a and two side surface portions 30b facing each other. The bottom portion 30a may have a shape in which a front surface and a rear surface are opened along the X-axis direction and the upper portion is opened along the Z-axis direction. The side surface portions 30b may extend from both sides of the bottom portion 30a in the Z-axis direction. The bottom portion 30a and the side surface portions 30b form a space for housing the battery cell stack 12.

Meanwhile, before the battery cell stack 12 is mounted on the module frame 30, a thermally conductive resin layer 31 may be formed between the module frame 30 and the battery cell stack 12. The thermally conductive resin layer 31 may serve to transfer heat generated from the battery cell stack 12 to the outside of the battery module and fix the battery cell stack within the battery module.

The thermally conductive resin layer 31 can be formed by applying and curing a thermally conductive resin to the bottom portion 30a of the module frame 30. Meanwhile, when applying the thermally conductive resin, a pad 32 can be disposed on the bottom portion 30a in order to prevent the thermally conductive resin from overflowing outside the required area. The pad 32 is disposed on both ends of the bottom portion 30a to control the direction in which the thermally conductive resin is applied. However, in the process of spreading the thermally conductive resin, it may go beyond the pads 32 and diffuse to areas other than the application area.

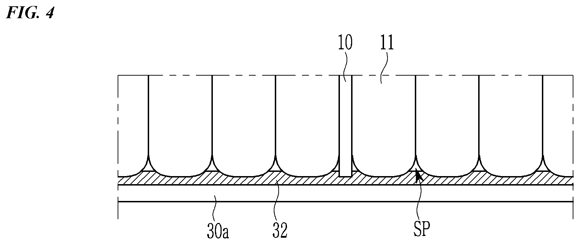

Referring to FIGS. 3 and 4 together, after the battery cell stack 12 is mounted on the module frame 30, a space SP that is not completely filled exists between the pad 32 and the battery cell stack 12. The thermally conductive resin may overflow out of the pad 32 through this space SP in the application process. In this case, the battery cell stack 12 may be damaged, and the performance of the battery cell stack 12 may deteriorate and a safety problem may occur.

Therefore, there is a need to develop a structure that can control overflow of a thermally conductive resin during the formation process of the thermally conductive resin layer.

### [DETAILED DESCRIPTION OF THE INVENTION]

### [Technical Problem]

It is an object of the present disclosure to provide a battery module that prevents overflow of a thermally conductive resin and a battery pack including the same.

However, the technical objects solved by the embodiments of the present disclosure are not limited to those disclosed above, and may be expanded in various ways within the scope of the technical idea included in the present disclosure.

### [Technical Solution]

According to an aspect of the present disclosure, there is provided a battery module comprising: a battery cell stack containing a plurality of battery cells; a module frame that comprises a bottom portion and two side surface portions facing each other, and accommodates the battery cell stack therein; a thermally conductive resin layer disposed between one surface of the module frame and the battery cell stack; a pad disposed on at least one end of the one surface of the module frame; and a reinforcement material disposed between the battery cell stack and the pad, wherein the reinforcement material fills a space between the battery cell stack and the pad.

In an embodiment, the one surface may be an upper surface of the bottom portion.

In an embodiment, the one surface may be an inner surface of the side surface portion.

In an embodiment, the reinforcement material may include a resin.

In an embodiment, the thermally conductive resin layer may not overflow to the outside of the pad and the reinforcement material.

In an embodiment, the reinforcement material may be first provided on one surface of the battery cell stack in an uncured state, and then formed while being compressed and cured between the battery cell stacks and the pads when the battery cell stack is accommodated in the module frame.

In an embodiment, the reinforcement material may be polyurethane foam (PU foam).

In an embodiment, the reinforcement material may be silicone.

In an embodiment, a plurality of the pads may be disposed on both ends of the one surface of the module frame, and the thermally conductive resin layer may be disposed between the pads.

According to another aspect of the present disclosure, there is provided a battery pack comprising the above-mentioned battery module.

### [Advantageous Effects]

The battery module of the present disclosure includes a reinforcement material that fills a space between the battery cell stack and the pad, and thus can prevent the thermally conductive resin from flowing into an unintended space when the battery cell stack is inserted into the module frame.

### [BRIEF DESCRIPTION OF THE DRAWINGS]

FIG. 1 is an exploded perspective view showing a conventional battery module.
FIG. 2 is a perspective view of a conventional battery cell stack as viewed from below.
FIG. 3 is a cross-sectional view showing a cross section of the battery module of FIG. 1 taken along the YZ plane.
FIG. 4 is an enlarged cross-sectional view showing a portion of FIG. 3.

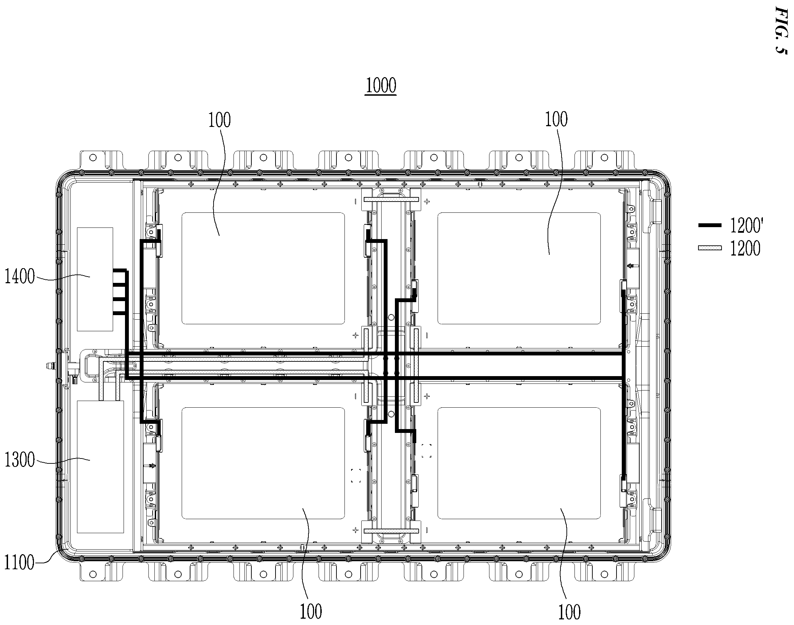

FIG. 5 is a plan view showing a battery pack according to an embodiment.

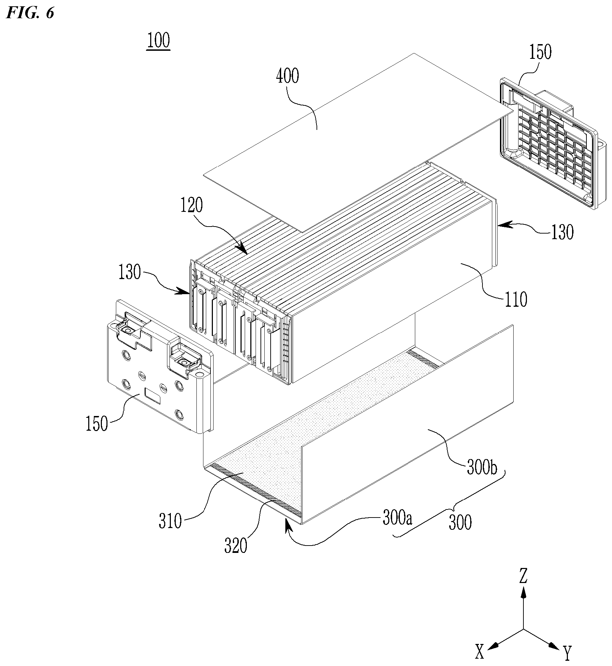

FIG. 6 is an exploded perspective view showing a battery module according to an embodiment.

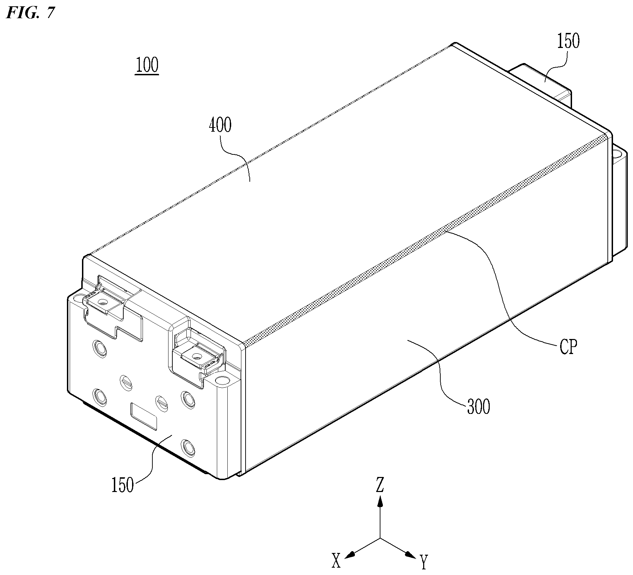

FIG. 7 is a combined perspective view showing a battery module in which the components shown in FIG. 6 are combined.

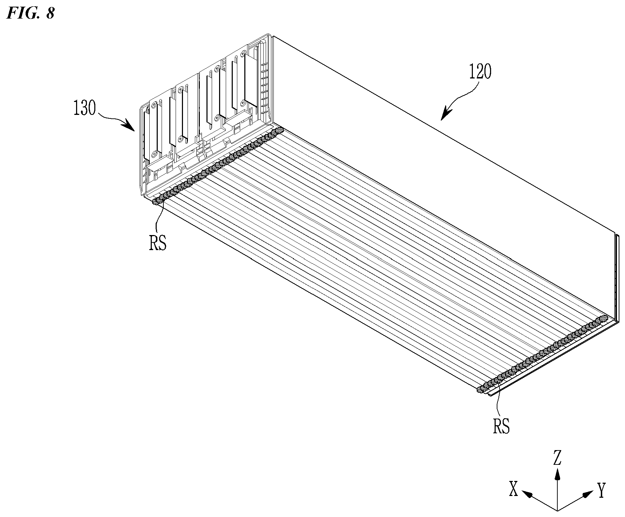

FIG. 8 is a perspective view of the battery module of FIG. 6 as viewed from below.

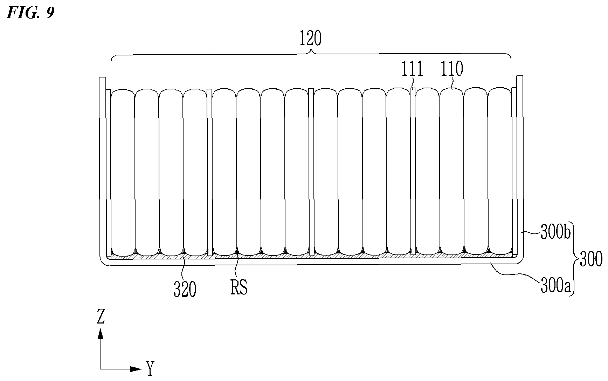

FIG. 9 is a cross-sectional view showing a cross section of the battery module of FIG. 7 taken along the YZ plane.

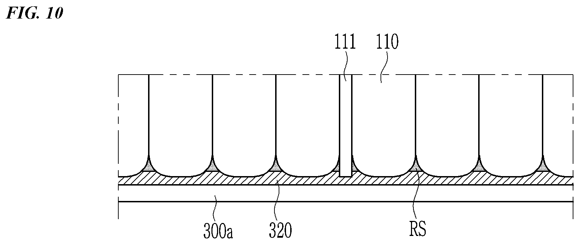

FIG. 10 is an enlarged cross-sectional view showing a portion of FIG. 9.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

FIG. 5 is a plan view showing a battery pack according to an embodiment.

Referring to FIG. 5, a battery pack 1000 according to an embodiment includes battery modules 100, a pack frame 1100, a busbar assembly 1200, a BDU(battery disconnect unit) module 1300 for controlling electrical connection of the battery modules 100, and a BMS(battery management system) module 1400 for monitoring and controlling operation of the battery modules 100. At least one busbar assembly 1200 according to the present embodiment electrically connects at least one of: between the battery modules 100, between the battery module 100 and the BDU module 1300, between the battery module 100 and the BMS module 1400, and between the BDU module 1300 and the BMS module 1400. Specifically, a plurality of battery modules 100 can be accommodated in the pack frame 1100, and electrical connections between the battery modules 100 or between the battery module 100 and the BDU module 1300 can be made by the busbar assembly 1200. That is, the busbar assemblies 1200 according to the present embodiment may provide the high voltage(HV) connection. Here, the HV connection refers to a connection that serves as a power source for supplying a power requiring a high voltage, such as a connection between battery cells or a connection between battery modules.

Meanwhile, the BDU module 1300 is a member that controls the electrical connection of the battery modules 100, and for example, may shut off the power supply between a power converter and the battery modules 100. Under a condition that a current exceeds a set range, the BDU module 1300 may shut off the power supply of the battery pack 1000, to ensure the safety of the battery pack 1000.

Meanwhile, low voltage(LV) connection members 1200' according to the present embodiment may make the electrical connection between the battery modules 100 and the BMS module 1400. Here, the electrical connection refers to an LV connection that indicates a sensing connection for detecting and controlling the voltages and temperatures of the battery modules 100. Specifically, sensors or the like are disposed in the battery modules 100, and information of the temperatures or voltages of the battery modules 100 is transmitted in real time to the BMS module 1400 via the LV connection members 1200'. From the BMS module 1400, the operation states of the battery modules 100 may be monitored and controlled in real time. Although not specifically illustrated, an HV current sensor may be integrated in the BMS module 1400. In this case, the busbar assemblies according to the present embodiment may make the electrical connection between the battery modules 100 and the BMS module 1400 or between the BDU module 1300 and the BMS module 1400.

The battery modules according to the present embodiment will be described below with reference to FIGS. 6 to 10. However, each battery module 100 described hereinafter is an exemplary structure of a battery module including a battery cell stack 120, to which various types of battery modules each including a battery cell stack 120 can be applied.

FIG. 6 is an exploded perspective view showing a battery module according to an embodiment.

FIG. 7 is a combined perspective view showing a battery module in which the components shown in FIG. 6 are combined.

FIG. 8 is a perspective view of the battery module of FIG. 6 as viewed from below.

FIG. 9 is a cross-sectional view showing a cross section of the battery module of FIG. 7 taken along the YZ plane.

FIG. 10 is an enlarged cross-sectional view showing a portion of FIG. 9.

Referring to FIGS. 6 and 7 together, the battery module 100 according to the present embodiment includes a battery cell stack 120 containing a plurality of battery cells 110 and a module frame 300 that accommodates the battery cell stack 120 therein. The battery cell stack 120 includes a plurality of battery cells 110 stacked in one direction, and for example, the plurality of battery cells 110 may be stacked in the Y-axis direction as illustrated in FIG. 6. The battery cells 110 may be pouch-type battery cells, but the embodiment of the present disclosure is not limited thereto. Meanwhile, the battery cell stack 120 may further include a compression pad 111 disposed between the plurality of battery cells 110 as illustrated in FIG. 9. The compression pad 111 includes expanded foam, etc. and thus can absorb swelling of the battery cell 110 and improve the structural stability of the battery module 100.

The battery module 100 may further include an upper plate 400 that couples with the module frame 300 and covers the upper portion of the battery cell stack 120, end plates 150 located on a front surface and a rear surface of the battery cell stack 120, respectively, and a busbar frame 130 located between the battery cell stack 120 and the end plate 150.

The battery module 100 includes a thermally conductive resin layer 310 located between the battery cell stack 120 and the module frame 300. The thermally conductive resin layer 310 may be a thermally conductive adhesive. Various organic and/or inorganic resins such as a thermally conductive epoxy adhesive, a thermally conductive silicone adhesive, and a thermally conductive urethane adhesive may be adopted as the thermally conductive adhesive. The thermally conductive resin layer 310 may serve to adhesively fix the battery cell stack 120 within the battery module 100. Furthermore, since the thermally conductive resin layer 310 has a higher thermal conductivity than a general adhesive, it may further increase the amount of heat transfer and the speed of heat transfer between the battery cell stack 120 and the module frame 30, and may serve as a heat dissipation layer that transfers heat generated from the battery cell stack 120 to the outside of the battery module 100. The thermally conductive resin layer 310 is disposed between the battery cell stack 120 and one surface of the module frame 300.

The module frame 300 may have a shape in which an upper surface, a front surface and a rear surface are opened. The module frame 300 may be a U-shaped frame. When both open sides of the module frame 300 are referred to as the first side and the second side, respectively, the module frame 300 is formed of a plate-shaped structure that is folded to continuously wrap around the front, lower surface, and rear surface adjacent to each other among the remaining outer surfaces, except for the surfaces of the battery cell stack 120 corresponding to the first side and the second side. The upper surface facing the lower surface of the module frame 300 is open.

A pad 320 is disposed on the one surface of the module frame 300, and can guide the application position of the thermally conductive resin during the formation process of the thermally conductive resin layer 310.

The module frame 300 includes a bottom portion 300a and two side surface portions 300b facing each other. As described above, the thermally conductive resin layer 310 is disposed between one surface of the module frame 300 and the battery cell stack 120. The one surface of the module frame 300 may be either the upper surface of the bottom portion 300a or the inner surface of the side surface portion 300b. The upper surface of the bottom portion 300a may be a surface facing the lower surface of the battery cell stack 120. The inner surface of the side surface portion 300b may be a surface facing the front and rear surfaces of the battery cell stack 120. In an embodiment, the thermally conductive resin layer 310 may be disposed between the upper surface of the bottom portion 300a of the module frame 300 and the battery cell stack 120. Alternatively, in another embodiment, the thermally conductive resin layer 310 may be disposed between the inner surface of the side surface portion 300b of the module frame 300 and the battery cell stack 120.

Hereinafter, as an example, the thermally conductive resin layer 310 is described as being disposed on the upper surface of the bottom portion 300a of the module frame 300. That is, the structure in which the thermally conductive resin layer 310, the pad 320, and the reinforcement material RS described below are disposed on the bottom portion 300a will be described as an example.

However, the embodiment of the present disclosure is not limited thereto, and the thermally conductive resin layer 310 may be disposed on the inner surface of the side surface portion 300b rather than the bottom portion 300a. In this case, the descriptions of the relationship between the thermally conductive resin layer 310, the pad 32, and the reinforcement material RS described below apply similarly.

In an embodiment, referring to FIG. 6, the thermally conductive resin layer 310 is formed by being applied long on the bottom portion 300a in the X-axis direction, which is the extension direction of the bottom portion 300a.

The pad 320 is disposed at least at one end of the bottom portion 300a. For example, the pad 320 may be disposed on both ends of the bottom portion 300a to guide the position of application of the thermally conductive resin during the formation process of the thermally conductive resin layer 310, or to prevent the thermally conductive resin from overflowing outside the pad 320. In FIG. 6, it is illustrated that the pad 320 is formed one-by-one on each end of the bottom portion 300a, but the size, position, and number of the pads 320 may be modified and designed in consideration of the amount of thermally conductive resin applied, etc. The pad 320 may have insulating properties. In addition, when the battery cell stack 120 is inserted into the module frame 300, the pad 320 may be made of a material such as a polyurethane foam(PU foam) or a rubber so that the pad 320 that contacts the bottom surface of the battery cell stack 120 can be compressed.

The upper plate 400 has a single plate-shaped structure that wraps the remaining upper surface excluding the front, lower and rear surfaces which are wrapped by the module frame 300. The module frame 300 and the upper plate 400 can be coupled by welding or the like in a state in which the corresponding corner areas are in contact with each other, thereby forming a structure wrapping the battery cell stack 120. That is, the module frame 300 and the upper plate 400 can form a coupling portion CP at the corresponding corner portions by a coupling method such as welding.

Referring to FIGS. 6, 8, 9, and 10 together, a reinforcement material RS is disposed between the battery cell stack 120 and the pad 320 of an embodiment. In order to explain the position where the reinforcement material RS is formed, the pad 320 is omitted in FIG. 8. The reinforcement material RS may be disposed along the Y-axis direction, which is the extension direction of the pad 320. The reinforcement material RS fills a space SP (see FIG. 3) between the battery cell stack 120 and the pad 320 when the battery cell stack 120 is accommodated in the module frame 300. The space SP (see FIG. 3) means the gap between the battery cell stack 120 and the pad 320. The reinforcement material RS can prevent the thermally conductive resin layer 310 from overflowing from the pad 320 through the space SP (see FIG. 3).

The reinforcement material RS may include a resin. For example, the reinforcement material RS may be a polyurethane foam (PU foam) formed by spraying a polyurethane spray or the like on one surface of the battery cell stack 120, for example, on the lower surface. Alternatively, the reinforcement material RS may be a silicone formed by using a silicone gun or the like on one surface of the battery cell stack 120, for example, on the lower surface. However, the material of the reinforcement material RS is not limited to those described above, and can be used as long as it has insulation properties and a predetermined compressibility.

The reinforcement material RS may be first provided on one surface of the battery cell stack 120, for example, on the lower surface, in an uncured state, and then formed while being compressed and cured between the battery cell stack 120 and the pad 320 when the battery cell stack 120 is accommodated in the module frame 300. The reinforcement material RS may fill the space SP (see FIG. 3) between the battery cell stack 120 and the pad 320 during the compression process.

The battery module 100 of the present disclosure includes a reinforcement material RS disposed between the battery cell stack 120 and the pad 320 disposed on the bottom portion 300a of the module frame 300, thereby filling the space between the battery cell stack 120 and the pad 320 with the reinforcement material RS and effectively controlling overflow of the thermally conductive resin. Accordingly, it is possible to prevent a defect in the battery module 100 that occurs due to the formation of a thermally conductive resin layer 310 in an unintended portion.

In the embodiments above, expressions indicating directions such as "front," "rear," "left," "right," "up," and "down" have been used, but these expressions are used only to facilitate the description, and may vary, for example, depending on the location of a target object or an observer.

One or more battery modules according to an embodiment of the present disclosure described above may be mounted together with various control and protection systems such as a battery management system(BMS), a battery disconnect unit(BDU), and a cooling system, to form a battery pack.

The battery modules or the battery pack may be applied to various devices, which include, for example, transportation vehicles such as electric bicycles, electric vehicles, and hybrids, and energy storage systems (ESS). However, without being limited thereto, the battery modules or the battery pack may be applied to various devices using secondary batteries.

While the embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

100: battery module
120: battery cell stack
110: battery cell
111: compression pad
300: module frame
300a: bottom portion
300b: side surface portion
310: thermally conductive resin layer
320: pad
400: upper plate
RS: reinforcement material

## Claims

1. A battery module comprising:
a battery cell stack containing a plurality of battery cells;
a module frame that comprises a bottom portion and two side surface portions facing each other, and accommodates the battery cell stack therein;
a thermally conductive resin layer disposed between one surface of the module frame and the battery cell stack;
a pad disposed on at least one end of the one surface of the module frame; and
a reinforcement material disposed between the battery cell stack and the pad,
wherein the reinforcement material fills a space between the battery cell stack and the pad.

2. The battery module according to claim 1, wherein the one surface is an upper surface of the bottom portion.

3. The battery module according to claim 1, wherein the one surface is an inner surface of the side surface portion.

4. The battery module according to claim 1, wherein the reinforcement material comprises a resin.

5. The battery module according to claim 1, wherein the thermally conductive resin layer does not overflow to the outside of the pad and the reinforcement material.

6. The battery module according to claim 1, wherein the reinforcement material is first provided on one surface of the battery cell stack in an uncured state, and then formed while being compressed and cured between the battery cell stacks and the pads when the battery cell stack is accommodated in the module frame.

7. The battery module according to claim 1, wherein the reinforcement material is polyurethane foam (PU foam).

8. The battery module according to claim 1, wherein the reinforcement material is silicone.

9. The battery module according to claim 1, wherein a plurality of the pads are disposed on both ends of the one surface of the module frame, and
the thermally conductive resin layer is disposed between the pads.

10. A battery pack comprising the battery module according to claim 1.
